(19)

Europäisches
Patentamt
European
Patent Office
Office européen
des brevets

(11)     **EP 2 272 410 A1**

(12)     # EUROPEAN PATENT APPLICATION

(43) Date of publication:
**12.01.2011  Bulletin 2011/02**

(51) Int Cl.:
*A47J 31/60* *(2006.01)*     *B01D 61/08* *(2006.01)*
*B01D 63/08* *(2006.01)*

(21) Application number: **09164861.8**

(22) Date of filing: **08.07.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Delsante, Giovanna
20040 Busnago (IT)**

(72) Inventor: **Delsante, Giovanna
20040 Busnago (IT)**

(74) Representative: **Serravalle, Marco
Serravalle s.a.s,
Corso Roma, 120
26900 Lodi (LO) (IT)**

(54)     **Coffee Machine With Integrated Water Purification System**

(57)     The present invention is directed to a coffee machine comprising a system, inside or outside the coffee machine, for the purification of water based on a membrane, directly fed by the pump (1) of the coffee machine.

The invention is also directed to a kit for coffee machine which comprises a system for the purification of water based on a membrane.

EP 2 272 410 A1

**Description**

. The present invention is directed to a coffee machine comprising a system, inside or outside the machine, for the treatment of water which does not require maintenance and is able to remove hardness but in the same time to reduce total salinity and reject organic matters, heavy metals, bacteria. Producing the perfect water for the coffee machines.

. It is well known that the use of tap water for coffee machine leads to a quick scaling of the machine, due to $CaCO_3$, calcium carbonate scaling.

. Usually, coffee machine are coupled with a filter unit of ionexchange resins, placed independently outside the coffee machine. Two types of resins are used. Strong cationic resins which replace bivalent cations calcium and magnesium , present in the water with sodium cations. They are regenerated by NaCl and soften water to a very low degree of hardness.

. Weak cationic resins only remove calcium and magnesium of bicarbonate salts, and replace them with a proton, leaving in water all other cations and the hardness linked to free mineral acidity. This treatment reduces hardness in a more limited way and lowers the pH of water. These resins are difficult to regenerate and are therefore substituted once exhausted.

. However, both treatments only change hardness of water, without removing any other ion or heavy metals, organic substances and bacteria possibly present in water.

. The taste of coffee produced in a coffee machine is influenced by water. A cup of espresso is produced by passing hot water at around 90 °C at a pressure of about 9 bar through a bed of about 7 gram of finely powdered coffee. There are at least 13 variables which influence the quality of the espresso cup. Amongst them, quality of coffee, type of roasting, temperature and pressure of water, chemical composition of water.

. To obtain an excellent cup of espresso, it is essential not only to start with an excellent type of coffee and with the right temperature and pressure of water, but also to use water with proper chemical and physical characteristics:

- neutral pH
- low content of salts (below 250 ppm, preferably below 100 ppm);
- hardness below 9 °F (French degrees)

. In particular, it has been noted that hardness not only causes scaling of the machine, but also influences the extraction from coffee of emulsifiers and foaming substances which produce the proper foam on espresso. Consequently, it is highly desirable to have a coffee machine which produces coffee by using water with a well defined and stable quality of water.

. The present invention is directed to a coffee machine which comprises a system for treatment of water. More specifically, the coffee machine according to the present invention is provided with a system for the purification of water based on membrane filtration, preferably an osmotic membrane, more preferably a nanofiltration membrane. The nanofiltration membranes are selective reverse osmosis membranes, in the sense that are able to remove selectively the bivalent ion, like calcium and magnesium and are less selective versus monovalent ion like sodium or nitrates. The purification system does not require any maintenance.

. In a preferred embodiment of the invention, the membrane is placed after the pump, already present inside the coffee machine, which feeds the boiler of the machine. The pump provides the flow through the membrane is proportional to the pressure imposed by the pump and to the surface of the membrane. It is therefore possible to have the desired flow by selecting the proper pump and membrane size.

. The type of membrane to be used in the system of the present invention can be of several types: ultrafiltration, nanofiltration and reverse osmosis membranes. However, the preferred type of membranes are nanofiltration membranes. In fact, by using nanofiltration membranes it is possible to combine a very limited volume of the system which allows introduction of the purification system also in small machines for family use, and an excellent and stable quality of water.

. The use of reverse osmosis membranes is possible but requires much larger volumes and is therefore only possible in large machines for commercial locations (bars, restaurants etc.).

. The purification system according to the invention is capable of feeding the boiler of the coffee machine with water having hardness lower than 9 °F, preferably lower than 5 °F, most preferably comprised between 2 and 4 °F, and pH comprised between 6.0 and 8.0.

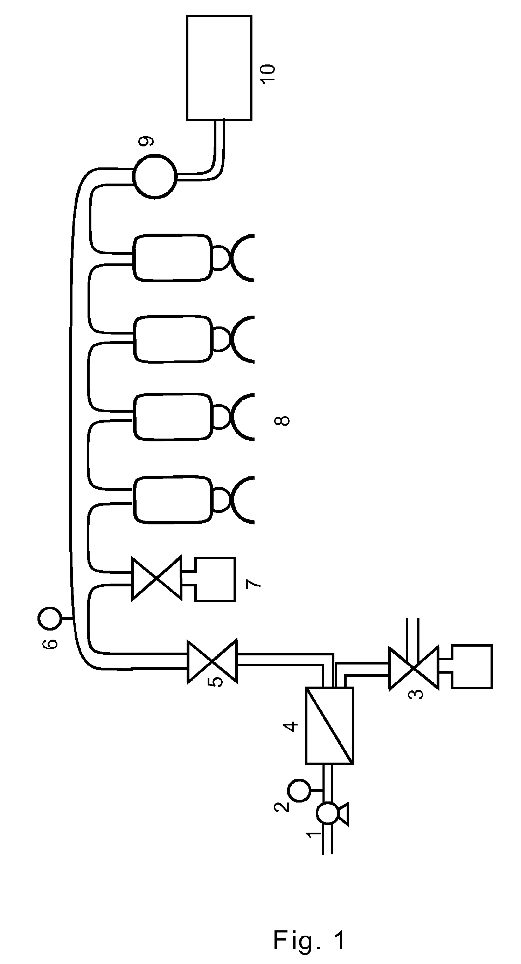

. A preferred embodiment of the invention is described in Fig. 1. (1) represents a pump which feeds the membrane filtration (4). (2) and (6) are manometers. (3) is a limiting valve set at 150 MPa and (7) is a limiting valve set at 90 MPa. (5) is a non-return valve. (8) are groups for the production of coffee and (10) is the water boiler of the coffee machine. In case of a large machine, the boiler is filled in each day in the morning when the machine is turned on. In this case, it is usually required that the boiler is filled quickly and, consequently, a large flux through the membrane is requested.

Water in the boiler is kept at temperature of about 90 °C under pressure of about 90 MPa, to be able to produce coffee under the best conditions. When the level of water is below a fixed value, the pump (1) is activated and the boiler filled in.

. The pump used in the coffee machine of the present invention depends on the type and size of the membrane used. In fact, the flow is proportional to the pressure through the membrane, the surface of the membrane through a constant K characteristic of the membrane.

$$Q = K \times S_m \times (\Delta P - \Delta \pi)$$

Wherein Q is the flux in l/h $S_m$ is the surface of the membrane in $m^2$ and $\Delta P$ is the transmembrane pressure differential in Pa and An is the osmotic pressure differential in Pa.

. Consequently, a suitable pump for use in the present invention preferably produces a pressure head comprised between 30 and 250 MPa, preferably between 90 and 200 MPa.

. The water obtained by nanofiltration is characterized by very low hardness (2-4 °F) and neutral pH; furthermore, nanofiltration also guaranties microbiological purity of water. Another advantage of the system according to the invention is that it does not require maintenance and can work without problems for several years.

. In a preferred embodiment of the invention, the nanofiltration membranes are selected, basically but not only, from the following membranes NF 2521, NF 2514, NF 3010, NF 3011, NF 3012, NF 4012, NF 4014 which are produced by Oltremare srl.

. In another embodiment, the present invention is directed to a kit for coffee machine which comprises a system for the purification of water which does not require maintenance. The kit preferably comprises a purification system based on membrane filtration, more preferably on nanofiltration. By the use of this kit, it is possible to introduce a purification system in a conventional coffee machine. The kit according to the invention is capable of feeding the boiler of the coffee machine with water having hardness lower than 9 °F and pH comprised between 6.0 and 8.0.

**Claims**

1. Coffee machine comprising a system, inside or outside the coffee machine, for the purification of water based on a membrane, directly fed by the pump of the coffee machine.

2. Coffee machine according to claim 1 wherein the system is based on ultrafiltration, nanofiltration or reverse osmosis.

3. Coffee machine according to claim 1 wherein the system is based basically but not only on nanofiltration, selective reverse osmosis membrane

4. Coffee machine according to claims 1-3 wherein the boiler of the coffee machine contains water having hardness lower than 9 °F, preferably lower than 5 °F.

5. Coffee machine according to claims 1-4 wherein the water flow through the membrane is comprised between 5 l/h and 1000 l/min, preferably between 20 l/h and 500 l/h.

6. Kit for coffee machine which comprises a system for the purification of water based on a membrane.

7. Kit according to claim 6 wherein the system is based on ultrafiltration, nanofiltration or reverse osmosis.

8. Kit according to claims 6-7 wherein water exiting the kit has pH comprised between 6.0 and 8.0 and hardness lower than 9 °F.

Fig. 1

Europäisches
Patentamt

European
Patent Office

Office européen
des brevets

# PARTIAL EUROPEAN SEARCH REPORT

**Application Number**

which under Rule 63 of the European Patent Convention EP 09 16 4861
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 197 56 479 A1 (ELLSEL HORST DR [DE] ELLSEL HORST [DE]) 1 July 1999 (1999-07-01) * abstract * * figure 2 * ----- | 1-3,6-7 | INV. A47J31/60 B01D61/08 B01D63/08 |
| X | US 2006/032796 A1 (HEITELE BERND [DE]) 16 February 2006 (2006-02-16) * paragraph [0003] * * paragraph [0030] - paragraph [0031] * ----- | 1,6 | |

|  | TECHNICAL FIELDS SEARCHED (IPC) |
|---|---|
|  | A47J B01D |

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 17 December 2009 | Sainz Martínez, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .......................................................................................
& : member of the same patent family, corresponding
    document

EPO FORM 1503 03.82 (P04E07)

Europäisches
Patentamt

European
Patent Office

Office européen
des brevets

**INCOMPLETE SEARCH
SHEET C**

Application Number

EP 09 16 4861

Claim(s) completely searchable:
1-3, 6-7

Claim(s) not searched:
4-5, 8

Reason for the limitation of the search:

Present claims 4,5 and 8 relate to an apparatus which has given desired
properties, namely specific water hardness, pH and flow rate. However,
these properties are not only dependent on the features of the apparatus
but also on its use and, more particularly, on the properties of the
water fed to the device. As these initial properties vary widely, it is
not possible to carry out a meaningful search on the aforementioned
claims (Rule 63 EPC and Guidelines B-VIII, 3).
In any case, the given parameter ranges do not appear to deviate
significantly from the normally expected values. The subject-matter of
these claims as presently formulated would therefore lack an inventive
step in the sense of Article 56 EPC.

**ANNEX TO THE EUROPEAN SEARCH REPORT**
**ON EUROPEAN PATENT APPLICATION NO.**                    EP 09 16 4861

This annex lists the patent family members relating to the patent documents cited in  the above-mentioned European search report.
The members are as contained in the European Patent Office EDP file on
The European Patent Office is in no way liable for these particulars which are merely given for the purpose of information.

17-12-2009

| Patent document cited in search report | | Publication date | Patent family member(s) | | Publication date |
|---|---|---|---|---|---|
| DE 19756479 | A1 | 01-07-1999 | NONE | | |
| US 2006032796 | A1 | 16-02-2006 | AT | 362897 T | 15-06-2007 |
| | | | AU | 2003280963 A1 | 02-02-2004 |
| | | | CA | 2492114 A1 | 22-01-2004 |
| | | | DE | 10231096 A1 | 22-01-2004 |
| | | | DK | 1519899 T3 | 08-10-2007 |
| | | | WO | 2004007374 A1 | 22-01-2004 |
| | | | EP | 1519899 A1 | 06-04-2005 |
| | | | ES | 2285145 T3 | 16-11-2007 |
| | | | JP | 2005532160 T | 27-10-2005 |
| | | | JP | 2009262155 A | 12-11-2009 |
| | | | RU | 2318729 C2 | 10-03-2008 |

EPO FORM P0459